# NEUE EUROPÄISCHE PATENTSCHRIFT

(11) **EP 2 640 764 B2**
(45) Veröffentlichungstag und Bekanntmachung des Hinweises auf die Entscheidung über den Einspruch: **13.03.2024**
(45) Hinweis auf die Patenterteilung: 25.03.2015
(21) Anmeldenummer: 11855250.4
(22) Anmeldetag: 17.11.2011
(51) Int. Cl.: C08K 3/36, C08G 8/28, B22C 1/22, C08G 18/54, C08G 18/79, C08G 18/18

(54) **BINDEMITTEL AUF POLYURETHANBASIS ZUR HERSTELLUNG VON KERNEN UND GIESSFORMEN UNTER VERWENDUNG VON ISOCYANATEN ENTHALTEND EINE URETHONIMIN- UND/ODER CARBODIIMID-GRUPPE, EINE FORMSTOFFMISCHUNG ENTHALTEND DAS BINDEMITTEL UND EIN VERFAHREN UNTER VERWENDUNG DES BINDEMITTELS**
BINDER BASED ON POLYURETHANE FOR PRODUCING CORES AND MOULDS USING ISOCYANATES CONTAINING A URETHONIMINE AND/OR CARBODIIMIDE GROUP, A MOULD MATERIAL MIXTURE CONTAINING SAID BINDER, AND A METHOD FOR USING SAID BINDER
LIANT À BASE DE POLYURÉTHANE POUR LA PRODUCTION DE NOYAUX ET DE MOULES À L'AIDE D'ISOCYANATES CONTENANT UN GROUPE URÉTHONIMIME ET/OU CARBODIIMIDE, UN MÉLANGE DE MOULAGE CONTENANT CE LIANT ET UN PROCÉDÉ D'UTILISATION DE CE LIANT

(30) Priorität: 18.11.2010 DE 102010051567
(43) Veröffentlichungstag der Anmeldung: 25.09.2013
(73) Patentinhaber: ASK Chemicals GmbH, 40721 Hilden (DE)
(72) Erfinder: CORNELISSEN, Carsten, 41751 Dülken (DE); KOCH, Diether, 40822 Mettmann (DE); PRIEBE, Christian, 42489 Wülfrath (DE)
(74) Vertreter: Müller Schupfner & Partner Patent- und Rechtsanwaltspartnerschaft mbB
(86) Internationale Anmeldenummer: PCT/DE2011/001996
(87) Internationale Veröffentlichungsnummer: WO 2012/097766

(56) Entgegenhaltungen:
- EP-A2- 0 417 600
- EP-A2- 0 417 600
- EP-A2- 1 057 554
- CN-A- 1 583 931
- US-A1- 2003 173 055

## Beschreibung

Die vorliegende Erfindung betrifft ein Bindemittel auf Polyurethanbasis unter Verwendung von Isocyanaten aufweisend mindestens eine Urethonimin-Gruppe zur Herstellung von Kernen und Gießformen, eine Formstoffmischung enthaltend das Bindemittel.

Die unter der Bezeichnung "Cold-Box-Verfahren" oder "Ashland-Verfahren" bekannt gewordene Methode der Kernherstellung hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Di-/Polyisocyanat mit mindestens zwei NCO-Gruppen pro Molekül. Die Aushärtung des Bindemittels erfolgt mit Hilfe von basischen Katalysatoren. Flüssige Basen können dem Bindemittel vor der Formgebung zugemischt werden, um die beiden Komponenten zur Reaktion zu bringen (US 3,676,392). Eine weitere Möglichkeit besteht darin, gasförmige tertiäre Amine nach der Formgebung durch das Formstoff-Bindemittel-Gemisch (US 3,409,579) zu leiten.

Nach der US 3,676,392 und der US 3,409,579 werden Phenolharze als Polyole eingesetzt, die durch Kondensation von Phenol mit Aldehyden, vorzugsweise Formaldehyd, in flüssiger Phase bei Temperaturen bis ca. 130°C in Gegenwart katalytischer Mengen von Metallionen erhalten werden.

In der US 3,485,797 wird die Herstellung solcher Phenolharze detailliert beschrieben. Außer unsubstituiertem Phenol können substituierte Phenole, vorzugsweise o-Kresol und p-Nonylphenol, zum Einsatz kommen (vergleiche z.B. US 4,590,229). Als weitere Reaktionskomponente können nach der EP 0177871 A2 mit aliphatischen Monoalkohol-Gruppen mit ein bis acht Kohlenstoffatomen modifizierte Phenolharze eingesetzt werden. Durch die Alkoxylierung sollen die Bindemittel eine erhöhte thermische Stabilität besitzen.

Als Lösungsmittel für die Polyol-Komponente werden überwiegend Gemische aus hochsiedenden polaren Lösungsmitteln (z.B. Ester und Ketone) und hochsiedenden aromatischen Kohlenwasserstoffen eingesetzt. Die Isocyanate werden dagegen bevorzugt in hochsiedenden aromatischen Kohlenwasserstoffen gelöst bzw. aufgenommen.

In US 6,883,587 B2 werden Bindemittel beschrieben, die monomere Carbodiimide in der Isocyanat-Komponente enthalten. Diese werden zu Verbesserung der Feuchtebeständigkeit eingesetzt. Die monomeren Carbodiimide haben die Struktur R¹-N=C=N-R² wobei R¹ und R² jeweils für Wasserstoff, Alkyl, Alkenyl, Cycloalkyl, Aryl, Naphthyl-Alkyl substituiertes Aryl oder Aralkyl stehen.

Es besteht ein großes Interesse, die Emissionen während der Kernherstellung, der Kernlagerung und während des Abgießens zu reduzieren. Nicht nur im Interesse des Umwelt- und Arbeitsschutzes, auch um die Maschinenverfügbarkeit, z.B. beim Kokillenguss, durch verminderte Kondensatbildung und damit verlängerte Reinigungsintervalle zu erhöhen. Zur Reduktion von Emissionsbelastungen bei der Kern-/Formherstellung, der Kem-Formtrocknung und dem Abguss von Formen und Kernen ist es wünschenswert, die Menge an pyrolisierbarem Material, sprich des aufgebrachten Bindemittels zu reduzieren, aber trotzdem die erforderlichen Eigenschaften beizubehalten.

Bei den Festigkeiten ist vor allem auf ausreichende Anfangsfestigkeiten zu achten, insbesondere, wenn selbsttragende Form unmittelbar nach ihrer Herstellung in (teil-) automatisierten Anlagen zu komplexen Kernpaketen zusammengebaut oder in metallische Dauerformen eingelegt werden sollen.

Der Erfindung lag daher die Aufgabe zugrunde, eine Formstoffmischung bereitzustellen, mittels derer sich Formkörper für die Gießereiindustrie herstellen lassen, welche gegenüber Formkörpern, die aus einer mit einem herkömmlichen Bindemittel versehenen Formstoffmischung hergestellt wurden, geringere Emissionen (Kondensate) aufweisen.

Diese Aufgabe wurde gelöst mit der Ausführungsform gemäß Patentanspruch 1 und der weiteren unabhängigen Ansprüche. Vorteilhafte Ausführungsformen sind Gegenstand der abhängigen Patentansprüche oder nachfolgend beschrieben.

Gegenstand der Erfindung ist ein Bindemittel für Formstoffmischungen in Form eines Zwei- oder Mehrkomponentensystems, aufweisend
(a) eine Polyol-Komponente, die frei von Isocyanat-Verbindungen ist, enthaltend eine oder mehrere Polyol-Verbindungen (A) mit zumindest 2 Hydroxy-Gruppen pro Molekül enthaltend mindestens ein Phenolharz als Polyol-Verbindung und
(b) eine Isocyanat-Komponente, die frei von Polyol-Verbindungen ist, enthaltend eine oder mehrere Isocyanat-Verbindungen (B) mit zumindest 2 Isocyanat-Gruppen pro Molekül enthaltend mindestens eine Isocyanat-Verbindung mit zumindest 2 Isocyanat-Gruppen pro Molekül und weiterhin aufweisend pro Molekül mindestens eine Urethonimin-Gruppe,
wobei die Isocyanat-Komponente (b) mindestens enthält größer 1 Gew.%, Isocyanat-Verbindungen mit zumindest 2 Isocyanat-Gruppen pro Molekül und weithin aufweisend pro Molekül mindestens eine Urethonimin-Gruppe.

Überraschend wurde gefunden, dass sich die Verwendung von Isocyanaten mit Urethonimin-Gruppe(n) die Kondensatbildung deutlich verringert. Dieses zeigt sich sowohl in lösemittelhaltigen als auch in lösemittelfreien Isocyanat-Formulierungen.

Das Bindemittel wird vorzugsweise in Form eines Zwei- oder Mehrkomponentensystems, aufweisend zumindest
(a) eine Polyol-Komponente, die im Wesentlichen frei von Isocyanat-Verbindungen ist, enthaltend die Polyol-Verbindung(en) (A) und
(b) eine Isocyanat-Komponente, die im Wesentlichen frei von Polyol-Verbindungen ist, enthaltend die Isocyanat-Verbindung(en) (B).
eingesetzt.

Weiterhin betrifft die Erfindung Formstoffmischungen, die feuerfeste Formgrundstoffe und von 0,2 bis 5 Gew.-%, bevorzugt 0,3 bis 4 Gew.-%, besonders bevorzugt 0,4 bis 3 Gew.-%, des erfindungsgemäßen Bindemittels, bezogen auf das Gewicht der feuerfesten Formgrundstoffe, umfassen. Als feuerfeste Formgrundstoffe können dabei beispielsweise Quarz-, Zirkon- oder Chromerzsand, Olivin, Schamotte und Bauxit verwendet werden. Weiterhin können auch synthetisch hergestellte Formgrundstoffe verwendet werden, wie z.B. Aluminiumsilikathohlkugeln (sog. Microspheres), Glasperlen, Glasgranulat oder die unter der Bezeichnung "Cerabeads" bzw. "Carboaccucast" bekannten kugelförmigen keramischen Formgrundstoffe. Mischungen der genannten Feuerfeststoffe sind ebenfalls möglich. Die feuerfesten Formgrundstoffe werden insbesondere in Form von rieselfähigen Pulvern eingesetzt.

Ein Verfahren zur Herstellung eines ausgehärteten Formkörpers als Gießformteil oder Kern umfasst:
(a) Vermischen von feuerfesten Formgrundstoffen mit dem erfindungsgemäßen Bindemittel in einer bindenden Menge von 0,2 bis 5 Gew.-% Bindemittel, bevorzugt 0,3 bis 4 Gew.-%, besonders bevorzugt 0,4 bis 3 Gew.-%, bezogen auf die Menge der feuerfesten Formgrundstoffe als Formstoffmischung;
(b) Einbringen des in Schritt (a) erhaltenen Formstoffmischung in ein Formwerkzeug;
(c) Härten des Formstoffmischung im Formwerkzeug, ggf. unter Zugabe eines Katalysators, um ein selbsttragende Form zu erhalten; und
(d) anschließendes Trennen der gehärteten Form vom Werkzeug und ggf. weiteres Härten, wodurch man ein hartes, festes, ausgehärtetes Gießformteil erhält.

Die Polyol-Komponente weist insbesondere Phenol-Aldehyd-Harze auf oder besteht aus diesen, hier vorliegend verkürzt Phenolharze genannt. Zur Herstellung der Phenolharze sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte , arylsubstituierte und aryloxysubstituierte Phenole.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexyl-phenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol. Besonders bevorzugt ist Phenol selbst. Auch höher kondensierte Phenole, wie Bisphenol A, sind geeignet. Darüber hinaus eignen sich auch mehrwertige Phenole, die mehr als eine phenolische Hydroxylgruppe aufweisen. Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin oder 5-Ethylresorcin.

Es können auch Gemische aus verschiedenen ein- und mehrwertigen und/oder substituierten und/oder kondensierten Phenol-Komponenten für die Herstellung der Polyol-Komponente verwendet werden.

In einer Ausführungsform werden Phenole der allgemeinen Formel I: 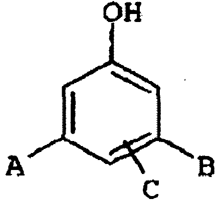 zur Herstellung der Phenolharze verwendet, wobei A, B und C unabhängig voneinander ausgewählt sind aus: einem Wasserstoffatom, einem verzweigten oder unverzweigten Alkylrest, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als Aldehyde zur Herstellung der Phenolharze eignen sich Aldehyde der Formel:

***R-CHO,***

wobei R ein Wasserstoffatom oder ein Kohtenwasserstoffatomrest mit vorzugsweise 1 bis 8, besonders bevorzugt 1 bis 3 Kohlenstoffatomen ist. Spezielle Beispiele sind Formaldehyd, Acetaldehyd, Propionaldehyd, Furfurylaldehyd und Benzaldehyd. Besonders bevorzugt wird Formaldehyd eingesetzt, entweder in seiner wässrigen Form, als para-Formaldehyd oder Trioxan.

Um die Phenolharze zu erhalten, wird vorzugsweise eine mindestens äquivalente Molzahl an Aldehyd, bezogen auf die Molzahl der Phenol-Komponente, eingesetzt. Bevorzugt beträgt das Molverhältnis Aldehyd zu Phenol 1 : 1,0 bis 2,5: 1, besonders bevorzugt 1,1 : 1 bis 2,2 : 1, insbesondere bevorzugt 1,2 : 1 bis 2,0 : 1.

Die Herstellung des Phenolharzes erfolgt nach dem Fachmann bekannten Verfahren. Dabei wird das Phenol und der Aldehyd unter im Wesentlichen wasserfreien Bedingungen, insbesondere in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Das Phenolharz (Polyol-Komponente) wird so gewählt, dass eine Vernetzung mit der Isocyanat-Komponente möglich ist. Für den Aufbau eines Netzwerkes sind Phenolharze, die Moleküle mit mindestens zwei Hydroxylgruppen (insbesondre mehr als zwei) im Molekül umfassen, notwendig.

Besonders geeignete Phenolharze sind unter der Bezeichnung "ortho-ortho"' oder "high-ortho"-Novolake bzw. Benzyletherharze bekannt. Diese sind durch Kondensation von Phenolen mit Aldehyden in schwach saurem Medium unter Verwendung geeigneter Katalysatoren erhältlich. Zur Herstellung von Benzyletherharzen geeignete Katalysatoren sind Salze zweiwertiger Ionen von Metallen wie Mn, Zn, Cd, Mg, Co, Ni, Fe, Pb, Ca und Ba. Bevorzugt wird Zinkacetat verwendet. Die eingesetzte Menge ist nicht kritisch. Typische Mengen an Metallkatalysator betragen 0,02 bis 0,3 Gew.-%, bevorzugt 0,02 bis 0,15 Gew.-%, bezogen auf die Gesamtmenge an Phenol und Aldehyd.

Solche Phenolharze sind z.B. in US 3,485,797 und in EP 1137500 B1 beschrieben, auf deren Offenbarung hiermit sowohl hinsichtlich der Harze selbst als auch hinsichtlich ihrer Herstellung ausdrücklich Bezug genommen wird.

Die Phenolharz-Komponente des Bindemittels wird bevorzugt als Lösung in einem organischen Lösungsmittel oder einer Kombination von organischen Lösungsmitteln eingesetzt. Lösungsmittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formgrundstoffes und dessen Rieselfähigkeit zu erhalten.

Die erfindungsgemäße Polyisocyanat- Komponente (b) des Bindemittels umfasst
- mindestens ein aliphatisches, cycloaliphatisches oder aromatisches Isocyanat, mit einer Funktionalität von mindestens 2,0 welches zumindest eine Urethonimin-Gruppe enthält,
- fakultativ zusätzlich eine oder mehrere aliphatische, cycloaliphatische oder aromatische Polyisocyanatverbindung, bevorzugt mit 2 bis 5 Isocyanatgruppen, die frei von Urethonimin- und Carbodiimidgruppen sind und
- fakultativ Lösemittel,
wobei die Isocyanat-Komponente (b) mindestens enthält größer 1 Gew.%, Isocyanat-Verbindungen mit zumindest 2 Isocyanat-Gruppen pro Molekül und weithin aufweisend pro Molekül mindestens eine Urethonimin-Gruppe.

Geeignete Polyisocyanate umfassen aliphatische Polyisocyanate, wie z.B. Hexamethylendiisocyanat, alicyclische Polyisocyanate wie z.B. 4,4'-Dicyclohexylmethandiisocyanat und Dimethylderivate hiervon. Beispiele geeigneter aromatischer Polyisocyanate sind Toluol-2,4-diisocyanat, Toluol-2,6-diisocyanat, 1,5-Naphthalendiisocyanat, Triphenylmethantrisocyanat, Xylylendiisocyanat und Methylderivate hiervon sowie Polymethylenpolyphenylisocyanate.

Insbesondere bevorzugt sind Polyisocyanate mit aromatischen Gruppen, besonders bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren (z.B. 2,4) und höheren Homologen.

Die erfindungsgemäß eingesetzten urethoniminhaltigen Isocyanate sind z.B. erhältlich durch eine katalytische Reaktion von Isocyanatgruppen zu einer Carbodiimidgruppe, wobei diese mit weiteren Isocyanatgruppen (teilweise) zu einer Urethonimingruppe weiterreagieren. Hierzu werden z.B. zwei Diisocyante zu einem Carbodiimid mit zwei Isocyant-Gruppen umgesetzt. Unter Hinzutreten von einem weiteren Diisocyant bildet sich eine Urethonimingruppe.

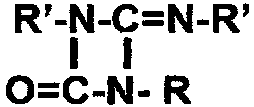

Geeignete modifizierte Isocyanate sind Urethonimin- modifizierte 4,4'-Diphenylmethandiisocyanate. Aber auch andere Isocyanate sind geeignet. Ein typisches Handelsprodukt ist Suprasec 4102 Fa Huntsmann (urethoniminmodifiziertes MDI).

Durch die Einfügung der Urethonimin-Gruppe, wird auch die Kältebeständigkeit erniedrigt / verbessert.

Die Isocyanat-Komponente kann vorzugsweise zwischen 2 und 35 Gew.%, Urethonimin-modifizierte Isocyanat Verbindungen enthalten. Nach einer Ausgestaltung sind somit Gegenstand der Erfindung eine Di- oder Polyisocyanat-Zusammensetzung als Isocyanat-Komponente von denen jeweils eine NCO-Gruppe durch Umsetzung zweier Moleküle Di- oder Polyisocyanat in eine Carbodiimidgruppe überführt ist und die Carbodiimidgruppen ihrerseits durch weitere Umsetzung mit einer Isocyanatgruppe eines weiteren Di- oder Polyisocyanat-Moleküls in eine Urethonimin-Gruppe überführt ist Die Umsetzungsprodukte ihrerseits weisen aber pro Molekül noch zumindest zwei nicht umgesetzte Isocyanatgruppen auf, im Falle der Urethonimin-Gruppe insbesondere zumindest drei nicht umgesetzte Isocyanatgruppen. Die Di- oder Polyisocyanat-Zusammensetzung ist insbesondere ein entsprechend modifiziertes Diphenylmethandiisocyanat.

Bevorzugt werden die modifizierten Isocyanate in einer Isocyanat-Komponente mit weniger als 40 Gew.-% Lösemittel, bevorzugt mit weniger als 20 Gew.-% Lösemittel, insbesondere weniger als 10 Gew.-% Lösemittel oder sogar kein Lösemittel verwendet. Aber auch Anwendungen mit höherer Lösemittelmenge sind möglich.

Im Allgemeinen werden 10 bis 500 Gew.-% Isocyanat-Komponente bezogen auf das Gewicht der Polyol-Komponente eingesetzt, vorzugsweise 45 bis 300 Gew.-%.

Bevorzugt werden die Isocyanat-Verbindungen, umfassend die modifizierten Isocyanate, in einer Menge eingesetzt, dass die Anzahl der Isocyanatgruppen von 80 bis 120 %, bezogen auf die Anzahl der freien Hydroxylgruppen des Harzes, beträgt.

Als Lösungsmittel für die Polyol-Verbindung, insbesondere das Phenolharz, können neben aromatischen Lösemitteln weiterhin sauerstoffreiche polare, organische Lösungsmittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester. Bevorzugt werden Dicarbonsäureester, cyclische Ketone und cyclische Carbonate verwendet. Dicarbonsäureester weisen die Formel R₁OOC-R₂-COOR₁ auf, wobei R₁ jeweils unabhängig voneinander eine Alkylgruppe mit 1 bis 12 (bevorzugt 1 bis 6) Kohlenstoffatomen darstellen und R₂ eine Alkylengruppe mit 1 bis 4 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind. Glykoletherester sind Verbindungen der Formel R₃-O-R₄-OOCR₅, wobei R₃ eine Alkylgruppe mit 1-4 Kohlenstoffatomen darstellt, R₄ eine Alkylengruppe mit 2 bis 4 Kohlenstoffatomen ist und R₅ eine Alkylgruppe mit 1-3 Kohlenstoffatomen ist (z.B. Butylglykolacetat), bevorzugt sind Glykoletheracetate. Glykoldiester weisen entsprechend die allgemeine Formel R₃COO-R₄-OOCR₅ auf, wobei R₃ bis R₅ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R₃-O-R₄-O-R₅ charakterisieren, in der R₃ bis R₅ wie oben definiert sind und die Reste jeweils unabhängig voneinander ausgewählt werden (z.B. Dipropylenglykoldimethylether).

Cyclische Ketone, cyclische Ester und cyclische Carbonate mit 4 bis 5 Kohlenstoffatomen sind ebenfalls geeignet (z.B. Propylencarbonat). Die Alkyl- und Alkylengruppen können jeweils verzweigt oder unverzweigt sein.

Geeignet sind auch Fettsäurester wie z.B. Rapsölfettsäuremethylester oder Ölsäurebutylester.

Um die Form- bzw. Kernflexibilität zu verbessern, können weiterhin Weichmacher zum Einsatz kommen. Um nicht bereits vor dem Abguss aus der Formstoffmischung bzw. dem Kern auszutreten, kommen schwerflüchtige Verbindungen zum Einsatz, die in der Regel einen Siedepunkt > 250 °C bei 25°C haben. Als Weichmacher können z.B. Phthalate (vgl. US 3.905.934), Citrate, Adipate, Trimellitate, Azelate, Dicarbonsäuren und deren Ester zum Einsatz kommen. Auch Fettsäureester können weichmachende Eigenschaften besitzen.

Neben den bereits erwähnten Bestandteilen können die Bindemittel Additive enthalten, z. B. Silane (z.B. gemäß EP 1137500 B1) oder interne Trennmittel, z. B. Fettalkohole (z.B. gemäß US 4,602,069), trocknende Öle (z.B. gemäß US 4,268,425) oder Komplexbildner (z.B. gemäß US 5,447,968) oder Gemische davon.

Geeignete Silane sind beispielsweise Aminosilane, Epoxysilane, Mercaptosilane, Hydroxysilane und Ureidosilane, wie γ-Hydroxypropyltrimethoxysilan, γ-Aminopropyltrimethoxysilan, 3-Ureidopropyltriethoxysilan, γ-Mercaptopropyltrimethoxysilan, γ-Glycidoxypropyltrimethoxysilan, β-(3,4-Epoxycyclohexyl) trimethoxysilan und N-ß-(Aminoethyl)-y-aminopropyltrimethoxysilan.

Für die Herstellung der Formstoffmischung können zuerst die Komponenten des Bindemittels vereinigt und dann zu dem feuerfesten Formgrundstoff zugegeben werden. Es ist jedoch auch möglich, die Komponenten des Bindemittels gleichzeitig oder nacheinander zu dem feuerfesten Formgrundstoff zu geben. Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Ein Verfahren zur Herstellung eines Formkörpers umfasst die Schritte:
- Bereitstellen der oben beschriebenen Formstoffmischung;
- Ausformen der Formstoffmischung zu einem Formkörper;
- Aushärten des Formkörpers durch Zugabe eines Aushärtungskatalysators.

Zur Herstellung des Formkörpers wird zunächst wie oben beschrieben das Bindemittel mit dem feuerfesten Formgrundstoff zu einer Formstoffmischung vermischt. Soll die Herstellung des Formkörpers nach dem PU-No-Bake-Verfahren erfolgen, kann der Formstoffmischung auch bereits ein geeigneter Katalysator zugegeben werden. Bevorzugt werden dazu flüssige Amine zur Formstoffmischung gegeben. Diese Amine weisen bevorzugt einen pK_{b}-Wert von 4 bis 11 auf. Beispiele geeigneter Katalysatoren sind 4-Alkylpyridine, wobei die Alkylgruppe 1 bis 4 Kohlenstoffatome umfasst, Isochinolin, Arylpyridine, wie Phenylpyridin, Pyridin, Acrylin, 2-Methoxypyridin, Pyridazin, Chinolin, n-Methylimidazol, 4,4'-Dipyridin, Phenylpropylpyridin, 1-Methylbenzimidazol, 1,4-Thiazin, N,N-Dimethylbenzylamin, Triethylamin, Tribenzylamin, N,N-Dimethyl-1,3-Propandiamin, N,N-Dimethylethanolamin sowie Triethanolamin. Der Katalysator kann gegebenenfalls mit einem inerten Lösungsmittel verdünnt werden, beispielsweise 2,2,4-Trimethyl-1,3-pentandiol-diisobutyrat, oder einem Fettsäureester. Die Menge des zugegebenen Katalysators wird, bezogen auf das Gewicht der Polyolkomponente, im Bereich von 0,1 bis 15 Gew.-% gewählt.

Die Formstoffmischung wird dann mit üblichen Mitteln in eine Form eingebracht und dort verdichtet. Die Formstoffmischung wird anschließend zu einem Formkörper ausgehärtet. Bei der Härtung sollte der Formkörper bevorzugt seine äußere Form behalten.

Die Aushärtung kann nach dem PU-Cold-Box-Verfahren erfolgen. Dazu wird ein gasförmiger Katalysator durch die geformte Formstoffmischung geleitet. Als Katalysator können die üblichen Katalysatoren auf dem Gebiet des Cold-Box-Verfahrens verwendet werden. Besonders bevorzugt werden Amine als Katalysatoren verwendet, insbesondere bevorzugt Dimethylethylamin, Dimethyl-n-propylamin, Dimethylisopropylamin, Dimethyl-n-butylamin, Triethylamin und Trimethylamin in ihrer gasförmigen Form oder als Aerosol. Der mit dem Verfahren hergestellte Formkörper kann an sich jede auf dem Gebiet der Gießerei übliche Form aufweisen. Der Formkörper kann in Form von Gießereiformen oder -kernen vorliegen.

Weiter betrifft die Erfindung einen Formkörper, wie er mit dem oben beschriebenen Verfahren erhalten werden kann. Dieser zeichnet sich durch eine hohe mechanische Stabilität, eine verbesserte Feuchtebeständigkeit, eine geringe Qualmentwicklung sowie ein geringe Kondensatbildung beim Metallguss aus. Weiter betrifft die Erfindung die Verwendung dieses Formkörpers für den Metallguss, insbesondere Eisen- sowie Aluminiumguss. Die Erfindung wird im Weiteren anhand von bevorzugten Ausführungsformen näher erläutert.

### Versuchsbeispiele

Zu 100 Gewichtsteilen Quarzsand H 32 (Firma Quarzwerke Frechen) wurden nacheinander jeweils 0,6 Gew.% Avecure AL 301 (Handelsprodukt der Firma Ashland-Südchemie-Kernfest GmbH) und die Isocyanat-Komponente (Teil 2) gegeben und in einem Labormischer (Firma Vogel und Schemmann AG) intensiv für 2 Minuten gemischt. Anschließend wurde die Formstoffmischungen in den Vorratsbehälter einer Kemschießmaschine (Firma Röperwerke Gießereimaschinen GmbH) überführt und mittels Druckluft (4 bar) in das Formwerkzeug eingebracht. Die Formkörper wurden durch Begasen mit 1 ml Triethylamin (2 sek., 2 bar Druck, danach 10 sek. Spülen mit Luft) ausgehärtet.

Folgende Polyisocyanat (polymeres MDI) Lösungen wurden hergestellt (jeweils in Gewichtsanteilen bzw. Gewichtsprozenten):

**Tabelle 1**

| **Teil 2:** | ***nicht erfindungsgemäß*** | | | | | | | |
|---|---|---|---|---|---|---|---|---|
| | V1 | | V2 | | | | | |
| PMDI | 80 | | 100 | | | | | |
| Solvent Naphtha leicht | 20 | | | | | | | |
| | | | | | | | | |
| | ***erfindungsgemäß*** | | | | | | | |
| | | | E2 | | | | | |
| | | | | | | | | |
| Suprasec 4102 | | | 100 | | | | | |
| | | | | | | | | |

| | | E3 | | E4 | E5 | E6 | | |
|---|---|---|---|---|---|---|---|---|
| Suprasec 4102 | | 80 | | 60 | 40 | 20 | | |
| Solvent Naphtha leicht | | 20 | | 20 | 20 | 20 | | |
| PMDI | | | | 20 | 40 | 60 | | |

Herstellung der Prüfriegel und Bestimmung der Biegefestigkeiten im Polyurethan-Cold-Box-Verfahren

Als Prüfkörper werden quaderförmige Prüfriegel mit den Abmessungen 220 mm x 22,36 mm x 22,36 mm, so genannte Georg-Fischer-Prüfriegel, hergestellt. Zur Bestimmung der Biegefestigkeiten wurden die Prüfriegel in ein Georg-Fischer Festigkeitsprüfgerät, ausgerüstet mit einer Drei-Punkt-Biegevorrichtung (Firma Simpson Technologies GmbH) eingelegt und die Kraft gemessen, welche zum Bruch der Prüfriegel führte.

Cogas Verfahren: Mit dem Cogas-Gerät wird der Abguss eines Gießereikerns unter Messung der entstehenden Menge an Kondensat und Gas während des Gießprozesses mit flüssigem Aluminium simuliert.

Während des Gießprozesses von Sandkernen, die mit organischen Bindemitteln gebunden sind, wird das Bindemittel mit flüssigem Aluminium (Temperaturbereich ca. 720°C) thermisch belastet, wobei dessen Bestandteile abdampfen (z.B. leicht flüchtige Lösemittel) bzw. cracken (z.B. schwer flüchtige Lösemittel und Harzbestandteile). Mit der Cogas-Anlage wird ein solcher Aluminium-Gießprozess unter standardisierten Bedingungen simuliert und die entstehenden Kondensate in den ersten 5 Minuten nach dem Eintauchen in einer Kohlfalle aufgefangen.

In den nachfolgenden Tabellen sind die Biegefestigkeiten und die Kondensatmengen nach dem Cogas Verfahren aufgelistet:

**Tabelle 2**

| | ***nicht erfindungsgemäß*** | | |
|---|---|---|---|
| Zugabemenge Teil 2: Festigkeiten N/cm² | 0,60% V1 | 0,60% V2 | 0.48% V2 |
| sofort 10" | 180 | 150 | 130 |
| sofort 30" | 210 | 190 | 175 |
| 0,5h | 330 | 335 | 270 |
| 1h | 340 | 360 | 295 |
| 2h | 340 | 370 | 275 |
| 24h | 390 | 355 | 275 |
| | | | |
| Kondensatbildung (mg/100g Kern) | 488 | 508 | 463 |
| | | | |
| **Beispiel** | **1** | **2** | **3** |

### Tabelle 3 (Beispiele 4 bis 8 gestrichen)

**Tabelle 4 (Beispiel 9 und 11 gestrichen)**

| | ***erfindungsgemäß*** | | | |
|---|---|---|---|---|
| Zugabemenge Teil 2: | | 0.60% E2 | | 0,48% E2 |
| Festigkeiten N/cm² | | | | |
| sofort 10" | | 115 | | 175 |
| sofort 30" | | 175 | | 250 |
| 0,5h | | 380 | | 365 |
| 1h | | 425 | | 320 |
| 2h | | 435 | | 360 |
| 24h | | 480 | | 380 |
| | | | | |
| Kondensatbildung (mg/100g Kern) | | 367 | | 329 |
| | | | | |
| **Beispiel** | | **10** | | **12** |

**Tabelle 5**

| | ***erfindungsgemäß*** | | | |
|---|---|---|---|---|
| Zugabemenge Teil 2: | 0,60% E3 | 0,60% E4 | 0,60% E5 | 0,60% E6 |
| Festigkeiten N/cm² | | | | |
| sofort 10" | 190 | 180 | 190 | 180 |
| sofort 30" | 220 | 220 | 230 | 220 |
| 0,5h | 340 | 350 | 350 | 330 |
| 1h | 360 | 350 | 360 | 350 |
| 2h | 380 | 360 | 380 | 370 |
| 24h | 450 | 450 | 480 | 450 |
| | | | | |
| Kondensatbildung (mg/100g Kern) | 375 | 399 | 415 | 438 |
| | | | | |
| **Beispiel** | **13** | **14** | **15** | **16** |

Die Beispiele 1 bis 3 zeigen den Festigkeitsverlauf von Kernen, die mit einem Teil 2 hergestellt wurden, welches lediglich aus MDI besteht. Mit zunehmender Zugabemenge von Teil 2 erhöhen sich erwartungsgemäß die Endfestigkeiten.

Die Beispiele 1 bis 3 und 10 & 12 zeigen den direkten Vergleich zwischen urethonimin- modifiziertem und unmodifiziertem MDI. Hier zeigt sich, dass der Austausch von lösemittelhaltigem Teil 2 gegen die gleiche Menge Urethoniminmodifiziertem MDI (Bsp. 1, 10) lediglich bei den Anfangsfestigkeiten zu einem schlechteren Ergebnis führt. Die Endfestigkeiten sind deutlich verbessert und die im Cogas entstandene Kondensatmenge wird reduziert. Das gleiche Bild ergibt sich auch beim Vergleich im Einsatz von lösemittelfreiem, unmodifiziertem MDI als Teil 2 und modifiziertem MDI (Bsp. 2, 10).

Wird als Teil 2 lediglich die Menge MDI eingesetzt, die auch schon im lösemittelhaltigen Teil 2 vorhanden ist, zeigt sich, dass das Urethoniminmodifizierte MDI deutliche Vorteile hat (Bsp. 3, 12). Das Festigkeitsprofil ist deutlich höher und die Kondensatbildung zeigt eine deutliche Reduktion beim Einsatz des Urethoniminmodifizierten MDIs.

Der Vergleich einer Standartmischung mit lösemittelhaltigem Teil 2 und der mit mengenmäßig angepasstem Urethonimin- modifiziertem MDI (Bsp. 1, 12) zeigt deutlich die Vorteile von letzterem System:
- vergleichbares Festigkeitsprofil bei abgesenkter Binderzugabe
- deutlich reduzierte Kondensatbildung (bis -30%).

Für die Mischungen deren Ergebnis in Tabelle 5 gezeigt ist wurde ein Urethonimin- modifiziertes Isocyanat mit 20% Lösemittel abgedünnt (E3) und dann schrittweise durch technisches 4,4'-MDI ersetzt (E4-E6). Dabei kann beobachtet werden, wie die entstehende Kondensatmenge von Beispiel 13 zu Beispiel 16 sinkt, während sich die Festigkeitseigenschaften nahezu ausgleichen.

## Patentansprüche

1. Bindemittel für Formstoffmischungen
in Form eines Zwei- oder Mehrkomponentensystems, aufweisend
(a) eine Polyol-Komponente, die frei von Isocyanat-Verbindungen ist, enthaltend eine oder mehrere Polyol-Verbindungen (A) mit zumindest 2 Hydroxy-Gruppen pro Molekül enthaltend mindestens ein Phenolharz als Polyol-Verbindung und
(b) eine Isocyanat-Komponente, die frei von Polyol-Verbindungen ist, enthaltend eine oder mehrere Isocyanat-Verbindungen (B) mit zumindest 2 Isocyanat-Gruppen pro Molekül enthaltend mindestens eine lsocyanat-Verbindung mit zumindest 2 Isocyanat-Gruppen pro Molekül und weiterhin aufweisend pro Molekül mindestens eine Urethonimin-Gruppe,
wobei die Isocyanat-Komponente (b) mindestens enthält größer 1 Gew.%, Isocyanat-Verbindungen mit zumindest 2 Isocyanat-Gruppen pro Molekül und weithin aufweisend pro Molekül mindestens eine Urethonimin-Gruppe.

2. Bindemittel nach Anspruch 1, enthaltend als weitere Bestandteile Lösungsmittel, Weichmacher und/oder Additive.

3. Bindemittel nach Anspruch 1 oder 2, wobei zumindest eine der Komponenten (a) und/oder (b) ein Lösungsmittel enthält, insbesondere zumindest die Polyol-Komponente (a) und unabhängig hiervon die Isocyanat-Komponente (b) bis zu 40 Gew.% lösemittel enthält, insbesondere bis zu 20 Gew.% oder sogar kein Lösungsmittel.

4. Bindemittel nach zumindest einem der Ansprüche 1 bis 3, wobei die Isocyanat-Komponente (b) mindestens enthält:
2 bis 35 Gew.% Isocyanat-Verbindungen mit zumindest 2 Isocyanat-Gruppen pro Molekül und weithin aufweisend pro Molekül mindestens eine Urethortimin-Gruppe.

5. Bindemittel nach zumindest einem der vorhergehenden Ansprüche, enthaltend weiterhin eine oder mehrere Isocyanat-Verbindungen mit größer 2 Isocyanat-Gruppen bis 5 Isocyanatgruppen, welche frei von Urethonimin-Gruppen und/oder Carbodiimid-Gruppe sind.

6. Bindemittel nach zumindest einem der vorhergehenden Ansprüche, wobei die Isocyanat - Verbindungen (B) aromatische Di- oder Polyisocyanate enthalten.

7. Bindemittel nach zumindest einem der vorhergehenden Ansprüche, wobei das Phenolharz erhältlich ist durch Umsetzung einer Phenol-Verbindung mit einer Aldehyd-Verbindung in saurem Medium unter Verwendung von Übergangsmetall-Katalysatoren, insbesondere Zink-Katalysatoren, insbesondere bevorzugt Zinkacetat-Dihydrat.

8. Bindemittel nach einem der vorhergehenden Ansprüche, wobei das Phenolharz ein Benzyletherharz ist.

9. Bindemittel nach Anspruch 7, wobei unabhängig voneinander
- die Phenol-Verbindung ausgewählt ist aus einem oder mehreren Mitgliedern der folgenden Gruppe: Phenol, o-Kresol, p-Kresoi, Bisphenol-A oder Cardanol und/oder
- die Aldehyd-Verbindung ein Aldehyd der Formel:
R-CHO
ist, worin für R ein Wasserstoffatom oder einen Kohlenstoffrest mit vorzugsweise 1 bis 8, besonders bevorzugt 1 bis 3, Kohlenstoffatomen steht.

10. Bindemittel nach zumindest einem der vorhergehenden Ansprüche, enthaltend bezogen auf das Bindemittel:
8 bis 70 Gew.%, insbesondere 10 bis 62 Gew.%, Polyol-Verbindungen, insbesondere Phenol-Harz, bzw. deren Umsetzungsprodukte,
13 bis 78 Gew.%, insbesondere 17 bis 70 Gew.%, Isocyanat-Verbindungen, bzw. deren Umsetzungsprodukte, und
2 bis 57 Gew.%, insbesondere 3 bis 53 Gew.%, Lösungsmittel.

11. Bindemittel nach Anspruch 1, wobei die Komponenten (a) und (b) im Gewichtsverhältnis 0,8 bis 1,2 zu 1,2 bis 0,8 im Bindemittel enthalten sind.

12. Formstoffmischung enthaltend das Bindemittel nach einem der Ansprüche 1 bis 11 enthaltend weiterhin
(C) feuerfeste Formgrundstoffe.

## Claims

1. A binder for mold material mixtures in the form of a two- or multi-component system, comprising
(a) one polyol component which is free of isocyanate compounds, comprising one or more polyol compounds (A) comprising at least 2 hydroxy groups per molecule and comprising at least one phenolic resin as polyol compound and
(b) an isocyanate component which is free of polyol compounds, comprising one or more isocyanate compounds (B) having at least 2 isocyanate groups per molecule, comprising at least one isocyanate compound having at least 2 isocyanate groups per molecule and further comprising per molecule at least one urethonimine group, wherein the isocyanate component (b) comprises at least greater than 1% by weight isocyanate compounds having at least 2 isocyanate groups per molecule and further comprising at least one urethonimine group per molecule.

2. The binder according to claim 1, comprising solvents, plasticizers and/or additives as additional ingredients.

3. The binder according to claim 1 or 2, wherein at least one of the components (a) and/or (b) comprises a solvent, in particular at least the polyol component (a) and independent thereof the isocyanate component (b) comprises up to 40% by weight solvent, in particular up to 20%, or no solvent at all.

4. The binder according to at least one of claims 1 to 3, wherein the isocyanate component (b) at least comprises:
2 to 35% by weight isocyanate compounds comprising at least 2 isocyanate groups per molecule and further comprising at least one urethonimine group per molecule.

5. The binder according to at least one of the preceding claims, further comprising one or more isocyanate compounds having more than 2 isocyanate groups and up to 5 isocyanate groups, which are free of urethonimine groups and/or carbodiimide groups.

6. The binder according to at least one of the preceding claims, wherein the isocyanate compounds (B) comprise aromatic diisocyanates or polyisocyanates.

7. The binder according to at least one of the preceding claims, wherein the phenolic resin is obtainable by reacting a phenol compound with an aldehyde compound in an acid medium using transition metal catalysts, in particular zinc catalysts, in particular preferred zinc acetate dihydrate.

8. The binder according to any one of the preceding claims, wherein the phenolic resin is a benzyl ether resin.

9. The binder according to claim 7, wherein independent of each other
- the phenol compound is selected from one or more members of the following group: phenol, o-cresol, p-cresol, bisphenol A or cardanol and/or
- the aldehyde compound is an aldehyde of the formula:
R-CHO
where R denotes a hydrogen atom or a carbon group having preferably 1 to 8, particularly preferably 1 to 3, carbon atoms.

10. The binder according to at least one of the preceding claims, comprising relative to the binder:
8 to 70% by weight, in particular 10 to 62% by weight, polyol compounds, in particular phenolic resin, or the reaction products thereof;
13 to 78% by weight, in particular 17 to 70% by weight, isocyanate compounds or their reaction products thereof; and
2 to 57% by weight, in particular 3 to 53% by weight, solvent.

11. The binder according to claim 1, wherein components (a) and (b) are present in the binder in a weight ratio of 0.8 to 1.2 to 1.2 to 0.8.

12. A mold material mixture, comprising the binder according to one of claims 1 to 11, further comprising
(C) refractory mold bases.

## Revendications

1. Liant pour des mélanges de matières de moulage sous la forme d'un système bicomposant ou multicomposant, comprenant :
(a) un composant polyol, qui est dépourvu de composés isocyanates, contenant un ou plusieurs composés polyols (A) avec au moins 2 groupes hydroxyles par molécule contenant au moins une résine phénolique en tant que composé polyol et
(b) un composant isocyanate, qui est dépourvu de composés polyols, contenant un ou plusieurs composés isocyanates (B) avec au moins 2 groupes isocyanates par molécule contenant au moins un composé isocyanate avec au moins 2 groupes isocyanates par molécule, et présentant également par molécule au moins un groupe uréthonimine,
dans lequel le composant isocyanate (b) au moins contient plus de 1 % en poids de composés isocyanates avec au moins 2 groupes isocyanates par molécule et présentant en outre par molécule au moins un groupe uréthonimine,

2. Liant selon la revendication 1, contenant des solvants, des plastifiants et/ou des additifs comme autres ingrédients.

3. Liant selon la revendication 1 ou 2, dans lequel au moins l'un des composants (a) et/ou (b) contient un solvant, en particulier au moins le composant polyol (a), et, indépendamment de cela, le composant isocyanate (b) contient jusqu'à 40 % en poids de solvant, en particulier jusqu'à 20 % en poids de solvant, voire même aucun solvant.

4. Liant selon au moins l'une des revendications 1 à 3, dans lequel le composant isocyanate (b) contient au moins :
2 à 35 % en poids de composés isocyanates avec au moins 2 groupes isocyanates par molécule et contenant en outre par molécule au moins un groupe uréthonimine.

5. Liant selon au moins l'une des revendications précédentes, contenant en outre un ou plusieurs composés isocyanates avec plus de 2 groupes isocyanates et jusqu'à 5 groupes isocyanates, qui sont dépourvus de groupes uréthonimine et/ou carbodiimide.

6. Liant selon au moins l'une des revendications précédentes, dans lequel les composés isocyanates (B) contiennent des di- ou polyisocyanates aromatiques.

7. Liant selon au moins l'une des revendications précédentes, dans lequel la résine phénolique peut être obtenue par réaction d'un composé phénolique avec un composé aldéhyde en milieu acide en utilisant des catalyseurs de métaux de transition, en particulier des catalyseurs de zinc, de manière particulièrement préférée de l'acétate de zinc dihydraté.

8. Liant selon l'une des revendications précédentes, dans lequel la résine phénolique est une résine d'éther benzylique.

9. Liant selon la revendication 7, dans lequel, indépendamment les uns des autres,
- le composé phénolique est choisi parmi un ou plusieurs éléments du groupe suivant : phénol, o-crésol, p-crésol, bisphénol A ou cardanol et/ou
- le composé aldéhyde est un aldéhyde de formule :
R-CHO,
dans laquelle R est un atome d'hydrogène ou un radical carbone ayant de préférence de 1 à 8, de manière particulièrement préférée de 1 à 3 atomes de carbone.

10. Liant selon au moins l'une des revendications précédentes, comprenant, par rapport au liant :
8 à 70 % en poids, en particulier 10 à 62 % en poids de composés polyols, en particulier de résine phénolique, et/ou leurs produits de réaction,
13 à 78 % en poids, en particulier 17 à 70 % en poids de composés isocyanates, et/ou leurs produits de réaction, et
2 à 57 % en poids, en particulier 3 à 53 % en poids de solvant.

11. Liant selon la revendication 1, dans lequel les composants (a) et (b) sont présents dans le liant en un rapport en poids de 0,8 à 1,2 sur 1,2 à 0,8.

12. Mélange de matières de moulage, contenant le liant selon l'une des revendications 1 à 11, comprenant en outre
(C) des matières de base de moulage réfractaires.
